# EUROPEAN PATENT APPLICATION

(11) **EP 4 040 380 A1**
(43) Date of publication of application: **10.08.2022**
(21) Application number: 19947556.7
(22) Date of filing: 03.10.2019
(51) Int. Cl.: G06T 7/00, G01B 11/02

(54) **INFORMATION PROCESSING DEVICE, INFORMATION PROCESSING PROGRAM, AND INFORMATION PROCESSING METHOD**

(71) Applicant: FUJITSU LIMITED, Kawasaki-shi, Kanagawa 211-8588 (JP)
(72) Inventor: ABE Narishige, Kawasaki-shi, Kanagawa 211-8588 (JP)
(74) Representative: Hoffmann Eitle
(86) International application number: PCT/JP2019/039112
(87) International publication number: WO 2021/064937

(57) **Abstract**

An information processing device includes, an image acquirer configured to acquire the image captured by the image capturing device, a target detector configured to detect from the acquired image a target for which an image analysis is performed, a use application determination controller configured to calculate a fineness of image of the detected target and determine a type of the image analysis according to the calculated fineness of image, and an image analyzer configured to perform the determined type of image analysis.

## Description

### TECHNICAL FIELD

The present invention relates to an information processing device, an information processing program, and an information processing method.

### BACKGROUND ART

In recent years, image analysis techniques have been attracting attention. Face recognition, which is one type of image analysis, is used to identify an individual from an image in a wide range of fields, for example, an authentication system such as for entrance and exit management for a building or venue as well as a personal terminal such as for unlocking a personal computer or smartphone. Further, in face recognition, for example, the attributes of a person such as age and gender may be estimated, and the estimated data may be used for marketing.

Techniques related to image analysis are described in the following Patent Literature 1 and Patent Literature 2.

### CITATION LIST

### PATENT LITERATURE

Patent Literature 1: Japanese Patent Application Publication No. 2014-145725
Patent Literature 2: Japanese Patent Application Publication No. 2008-131555

### SUMMARY OF INVENTION

### PROBLEMS TO BE SOLVED BY THE INVENTION

However, the face of a person in an acquired image may be unclear due to the environment of the location where the image is captured or the distance between the target person and the security camera. Further, the face of a person in an image may be unclear due to the movement of the target person or the resolution which is performance of the image capturing device. Such an unclear face may cause face recognition for identifying an individual to fail or may reduce the estimation accuracy of the attributes.

Further, disposing a large number of image capturing devices or disposing a high resolution image capturing device in order to clearly capture the face leads to an increase in cost.

Therefore, one disclosure provides an information processing device, an information processing program, and an information processing method for determining an image analysis applied to one image.

### MEANS FOR SOLVING THE PROBLEMS

An information processing device of an information processing system that includes an information processing device and an image capturing device configured to capture an image, the information processing device includes, an image acquirer configured to acquire the image captured by the image capturing device, a target detector configured to detect from the acquired image a target for which an image analysis is performed, a use application determination controller configured to calculate a fineness of image of the detected target and determine a type of the image analysis according to the calculated fineness of image, and an image analyzer configured to perform the determined type of image analysis.

### ADVANTAGEOUS EFFECTS OF THE INVENTION

One disclosure can determine an image analysis applied to one image.

### BRIEF DESCRIPTION OF DRAWINGS

Fig. 1 is a diagram illustrating a configuration example of an information processing system 10.
Fig. 2A and 2B are diagrams illustrating an example of the image capturing device 100 and target persons.
Fig. 3 is a diagram illustrating an example of an image captured by the image capturing device 100 when the target persons T1 to T3 are in the positional relationship of Fig. 2A and 2B.
Fig. 4 is a diagram illustrating a configuration example of the information processing device 200.
Fig. 5 is a diagram illustrating a configuration example of the image capturing device 100.
Fig. 6 is a diagram illustrating an example of a functional block of the information processing system 10.
Fig. 7 illustrates an example of a processing flowchart of the captured image analysis processing S100.
Fig. 8 illustrates an example of a processing flowchart of the person detection processing S300.
Fig. 9 illustrates an example of a processing flowchart of the use application determination processing S400.
Fig. 10 illustrates an example of a processing flowchart of the image fineness calculation processing S401.
Fig. 11 illustrates an example of a processing flowchart of the image fineness calculation processing S401 based on motion blur.
Fig. 12 illustrates an example of a processing flowchart of the image fineness calculation processing S401 based on a degree of missing part of image.

### DESCRIPTION OF EMBODIMENTS

### [First Embodiment]

A first embodiment will be described.

### <Configuration example of information processing system>

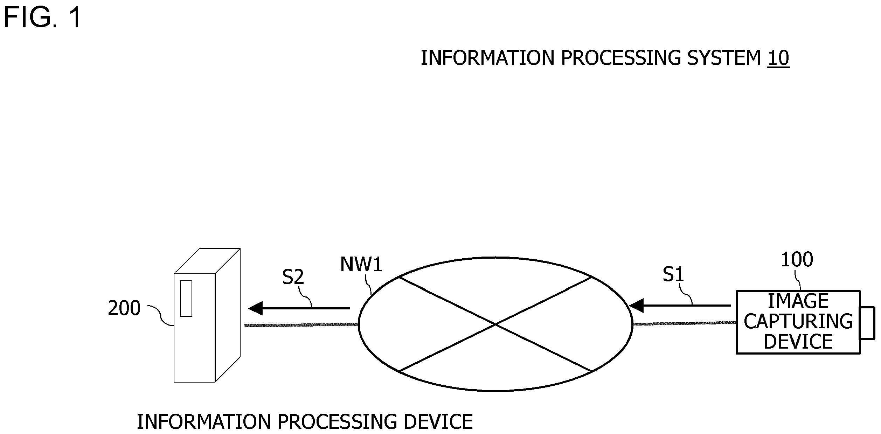

Fig. 1 is a diagram illustrating a configuration example of an information processing system 10. The information processing system 10 is a communication system that includes an image capturing device 100, an information processing device 200, and a network NW1. The information processing system 10 is, for example, a system that performs an image analysis on an image captured by the image capturing device 100. The information processing system 10 is installed in a facility such as a shopping center or a department store (hereinafter, may be referred to as an installation facility).

The image capturing device 100 is a device for capturing an image of a capture range of the device, and is also a camera installed for crime prevention, surveillance, or image acquisition. The image capturing device 100, for example, captures a moving image for a predetermined time or captures a still image. Note that the information processing system 10 in Fig. 1 includes the single image capturing device 100, but two or more image capturing devices 100 may be included.

The image capturing device 100 is installed so as to capture an image of a location in the installation facility. The capture location includes, for example, a specific sales section, stairs, aisles, and the like. Further, the image capturing device 100 is installed so as to capture a certain distance or range.

For example, the image capturing device 100 captures an image, and then transmits the captured image to the information processing device 200 (S1). Further, the image capturing device 100 may store the captured image in a memory or a hard disk, and periodically or in response to a request from the information processing device 200, may transmit the stored image to the information processing device 200 (S1).

The information processing device 200 performs image analysis processing on the image captured by the image capturing device 100. In the image analysis processing, the information processing device 200 detects a person whose image is to be analyzed (hereinafter, may be referred to as a target person or a target) from the image. Then, the information processing device 200 determines whether to perform a type of processing (analysis) as an image analysis for each detected person, and executes the determined processing for each person.

The network NW1 is a network through which communication is made between the information processing device 200 and the image capturing device 100, and is, for example, a local network or an intranet in a facility in which the information processing system 10 is installed, or the Internet. The information processing device 200 and the image capturing device 100 communicate with each other via the network NW1 to transmit and receive captured images. The network NW1 is a network for providing wired or wireless connection.

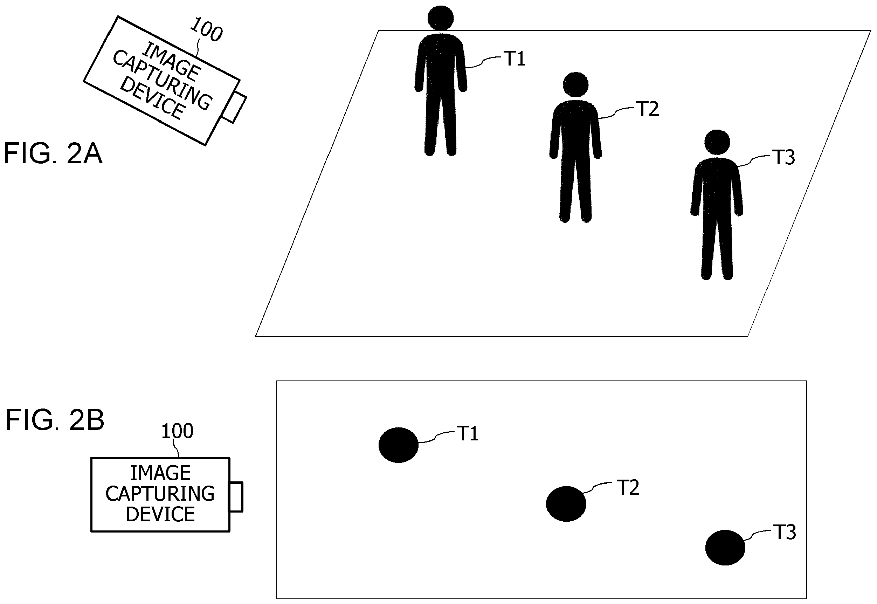

Fig. 2 is a diagram illustrating an example of the image capturing device 100 and target persons. Fig. 2A is a side view of the image capturing device 100 and the target persons T1 to T3. Fig. 2B is a top view of the image capturing device 100 and the target persons T1 to T3. Note that it is assumed that the target persons T1 to T3 have similar body shapes (height, width, etc.).

As illustrated in Fig. 2A, the target person T1 is located at the closest distance to the image capturing device 100. On the other hand, the target person T3 is located at the farthest distance from the image capturing device 100. The target person T2 is located approximately between the target person T1 and the target person T3.

Further, as illustrated in Fig. 2B, the target persons T1 to T3 are located so as to spread out laterally from the image capturing device 100.

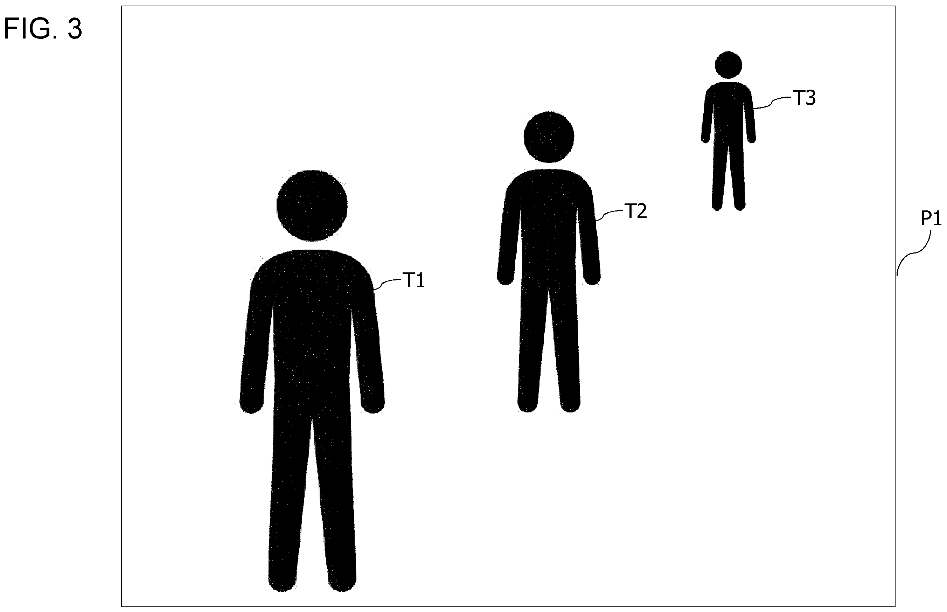

Fig. 3 is a diagram illustrating an example of an image captured by the image capturing device 100 when the target persons T1 to T3 are in the positional relationship of Fig. 2. As illustrated in Fig. 3, the target person T1 located at the closest distance to the image capturing device 100 appears to be the largest. On the other hand, the target person T3 located at the farthest distance from the image capturing device 100 appears to be the smallest.

In other words, for example, the target person T1 appears larger in the image than the target person T3. This indicates that the image of the target person T1 is an image composed of more pixels (px) than the image of the target person T3. In an image composed of more pixels, for example, parts of the face (e.g., eyes, nose, mouth, ears, etc.) and the body shape of a person, as well as decorations of the person such as clothing and belongings are also clearer. The clearer the image of the target person, the more likely it is that an individual is successfully identified by face recognition, and the more accurate the estimation of the attributes of the target person such as gender and height. Note that, in general, face recognition for identifying an individual requires a clearer image as compared with estimation of attributes such as gender and height.

On the other hand, the target person T3 that appears the smallest is an image composed of fewer pixels than those of the image of the target person T1. In this case, although it depends on the number of pixels, face recognition for identifying an individual or estimation of the attributes for the target person T3 with a predetermined accuracy or higher may fail. However, even in a small image, if the target person T3 can be detected from the image (if it can be identified as a human being), it is possible to acquire information as the number of persons appearing in the image. Further, if the direction of the target person T3 (which direction it is facing) can be identified, it is possible to acquire information on the flow of persons in the location appearing in the image.

In the information processing system 10 according to the first embodiment, the information processing device 200 determines in the analysis of the captured image a type of image analysis according to the fineness of image of the target person appearing in the captured image. The fineness of image is a value indicating how clearly the target person appears, such as the size, degree of sharpness, and degree of clarity of the target person appearing in an acquired image. The information processing device 200 performs an image analysis according to the fineness of image, thus making it possible to perform the image analysis suitable for each target person appearing in a single image and to efficiently perform the image analysis with a small number of images.

### <Configuration example of information processing device>

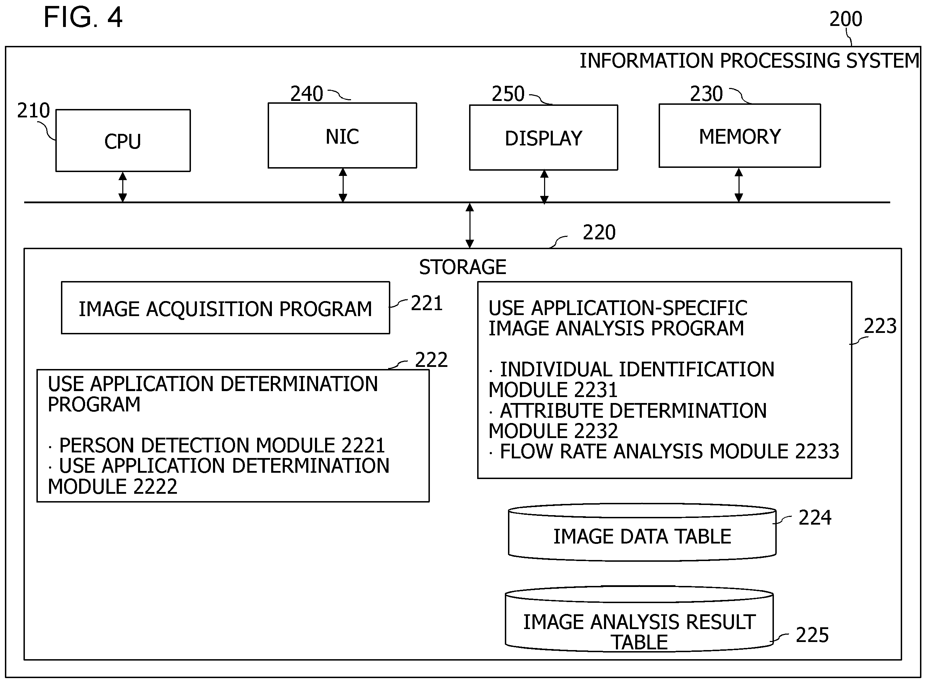

Fig. 4 is a diagram illustrating a configuration example of the information processing device 200. The information processing device 200 is a device that can communicate with other devices via the network NW1, and is, for example, a computer or a server machine.

The information processing device 200 includes a CPU (Central Processing Unit) 210, a storage 220, a memory 230, a NIC (Network Internet Card) 240, and a display 250.

The storage 220 is an auxiliary storage device such as a flash memory, an HDD (Hard Disk Drive), or an SSD (Solid State Drive), which stores programs and data. The storage 220 stores an image acquisition program 221, an image use application determination program 222, a use application-specific image analysis program 223, an image data table 224, and an image analysis result table 225. Note that the image data table 224 and the image analysis result table 225 may be stored in the memory 230, for example.

The memory 230 is an area in which a program stored in the storage 220 is loaded. The memory 230 may be also used as an area in which the program stores data.

The NIC 240 is an interface for connecting to the network NW1. The NIC 240 is, for example, an interface device having a port connected to the Internet, such as a network interface card.

The display 250 is a display unit that displays an image captured by the image capturing device 100, a result of image analysis, and the like. The display 250 may be integrated with the information processing device 200, or may be a device connected by a cable or the like.

The CPU 210 is a processor that loads a program stored in the storage 220 into the memory 230, and executes the loaded program to construct corresponding units and to implement steps of processing.

The CPU 210 executes the image acquisition program 221 so as to construct an image acquisition unit (acquirer) to perform image acquisition processing. The image acquisition processing is processing of acquiring an image captured by the image capturing device 100 from the image capturing device 100. The information processing device 200 receives image data from the image capturing device 100 via, for example, the NIC 240 to acquire an image therefrom.

The CPU 210 executes the image use application determination program 222 so as to construct an image use application determination unit (controller) to perform image use application determination processing. The image use application determination processing is processing of determining, for each target person appearing in an image, a processing type of image analysis for that person. The processing types of image analysis include, for example, individual identification processing, attribute determination processing, and flow rate analysis processing.

The CPU 210 executes a person detection module 2221 of the image use application determination program 222 so as to construct a target detection unit (detector) to performs person detection processing. The person detection processing is processing of searching for (detecting) the target person from the acquired image. The information processing device 200 executes the person detection processing in the image use application determination processing to detect the target person for image analysis, for example.

The CPU 210 executes a use application determination module 2222 of the image use application determination program 222 so as to construct a use application determination unit to perform use application determination processing. The use application determination processing is processing of determining a processing type (use application) of image analysis for the image of the target person detected in the person detection processing. For example, in the image use application determination processing, the information processing device 200 performs the use determination processing for each target person detected in the person detection processing, and performs the image analysis processing for each target person.

Further, the CPU 210 executes the use application-specific image analysis program 223 so as to construct an image analysis unit (analyzer) to perform use application-specific image analysis processing. The use application-specific image analysis processing is processing of performing an image analysis on the target person appearing in the image according to the result of the image use application determination processing.

The CPU 210 executes an individual identification module 2231 of the use application-specific image analysis program 223 so as to construct an individual identification unit and performs individual identification processing. The individual identification processing is processing of identifying the target person as an individual. For example, the individual identification processing analyzes the target person and detects the features of the appearance of the target person such as the face and body shape to the extent that the same person as the target person can be searched for from other images. Further, for example, the individual identification processing cooperates with a database for identifying individuals, information on past individual identification results, and the like, to identify the name, common name, individual identification number, and the like of the target person.

The CPU 210 executes an attribute determination module 2232 of the use application-specific image analysis program 223 so as to construct an attribute determination unit and performs attribute determination processing. The attribute determination processing is processing of determining the attributes of the target person. The attributes include, for example, gender, height, the color of the clothes worn, the presence or absence of belongings, and the like. The attribute determination processing is processing executed for the target person whose image has a fineness such that the features of the appearance can be analyzed to some extent, although the features of the details of the face fail to be analyzed.

The CPU 210 executes a flow rate analysis module 2233 of the use application-specific image analysis program 223 so as to construct a flow rate analysis unit and performs flow rate analysis processing. The flow rate analysis processing is processing of statistically analyzing how many persons appear in an image for each time or area. In the flow rate analysis processing, for example, if the moving direction of the target person or the direction in which the target person is facing can be analyzed, the flow of persons may be statistically analyzed. Further, the flow rate analysis processing may use statistics of changes in the number of target persons over time.

### <Configuration example of image capturing device>

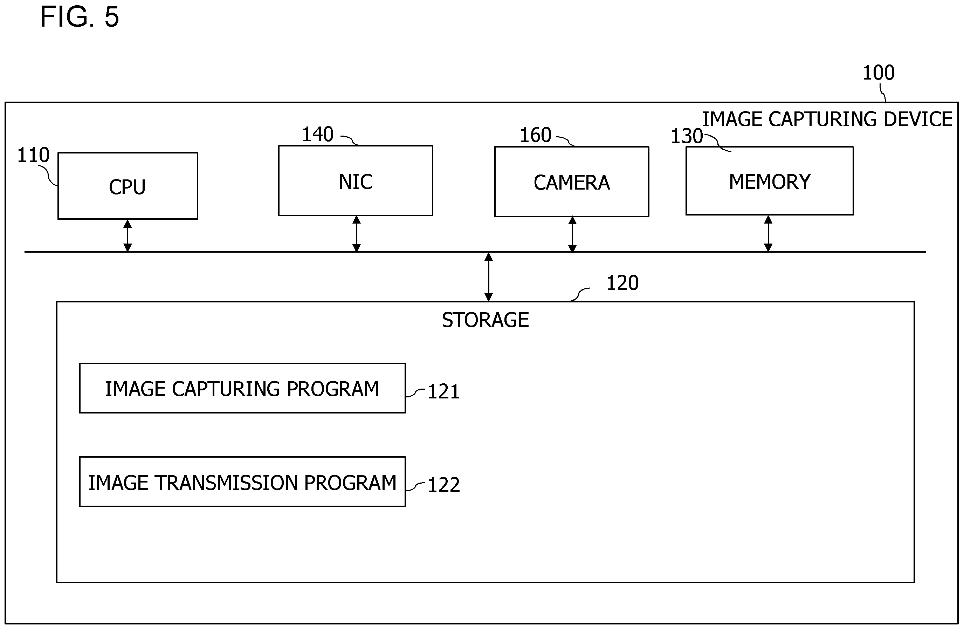

Fig. 5 is a diagram illustrating a configuration example of the image capturing device 100. The image capturing device 100 is a device that captures an image (still image, moving image, or both) of a predetermined range, and is, for example, a camera or a device including a camera.

The image capturing device 100 includes a CPU 110, a storage 120, a memory 130, a NIC 140, and a camera 160.

The storage 120 is an auxiliary storage device such as a flash memory, an HDD, or an SSD that stores programs and data. The storage 120 stores an image capturing program 121 and an image transmission program 122.

The memory 130 is an area in which a program stored in the storage 120 is loaded. The memory 130 may be also used as an area in which the program stores data.

The NIC 140 is an interface for connecting to the network NW1. The NIC 140 is, for example, an interface device having a port connected to the Internet, such as a network interface card.

The camera 160 is a device that captures an image (moving image, still image, etc.) of a predetermined range. The camera 160 captures images regularly or irregularly. Further, the camera 160 is triggered to capture an image by, for example, the CPU 110. Further, the image captured by the camera 160 is stored in, for example, the memory 130 or the storage 120.

The CPU 110 is a processor that loads a program stored in the storage 120 into the memory 130, and executes the loaded program to construct corresponding units and to implement steps of processing.

The CPU 110 executes the image capturing program 121 to perform image capturing processing. The image capturing processing is processing of capturing an image of the capture range of the image capturing device 100, for example, regularly. The captured image is, for example, stored in an external or internal memory or a hard disk, or transmitted to the information processing device 200.

The CPU 110 executes the image transmission program 122 to perform image transmission processing. The image transmission processing is processing of transmitting an image captured by the image capturing device 100 to the information processing device 200, for example, regularly.

### <Configuration example of functional block of information processing system >

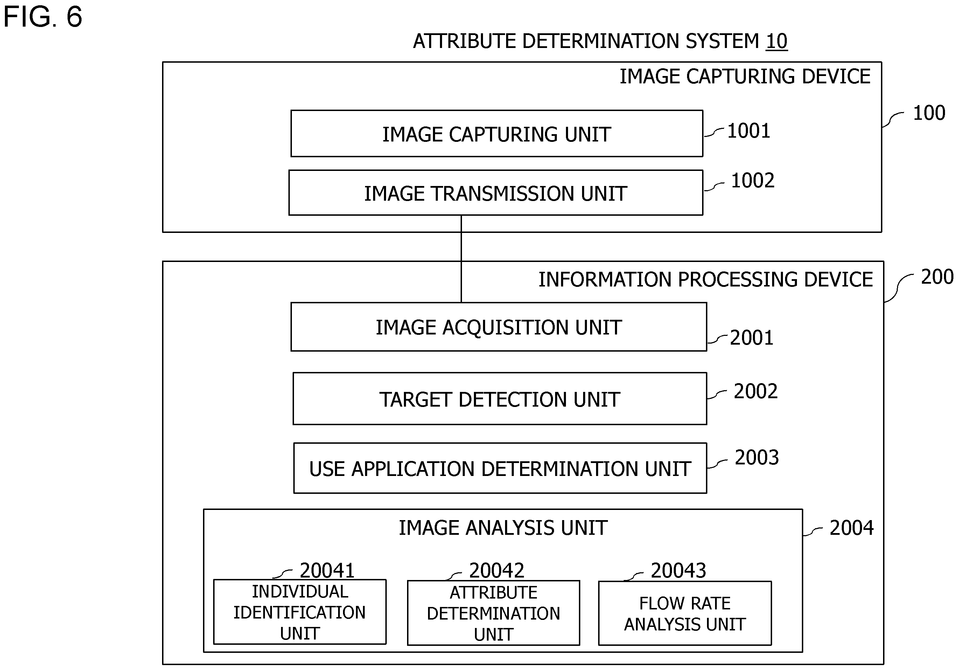

Fig. 6 is a diagram illustrating an example of a functional block of the information processing system 10. The image capturing device 100 includes an image capturing unit 1001 and an image transmission unit 1002. The image capturing unit 1001 and the image transmission unit 1002 are constructed, for example, by the processor of the image capturing device 100 executing a program. Further, the image capturing unit 1001 may be a camera. Further, the image transmission unit 1002 may be a device for a communication interface such as a network interface card.

The information processing device 200 includes an image acquisition unit 2001, a target detection unit 2002, a use application determination unit 2003, and an image analysis unit 2004. The image acquisition unit 2001, the target detection unit 2002, the use application determination unit 2003, and the image analysis unit 2004 are constructed, for example, by the processor of the information processing device 200 executing a program. Further, the image acquisition unit 2001 may be a device for a communication interface such as a network interface card.

The image capturing unit 1001 captures an image of a predetermined range regularly or irregularly. The image capturing unit 1001 stores the captured image in an internal or external memory or a hard disk, or passes the captured image to the image transmission unit 1002.

The image transmission unit 1002 transmits the image to the information processing device 200. The image transmission unit 1002 transmits an image, for example, regularly or irregularly, or transmits the image in response to a request from the information processing device 200. The image transmission unit 1002 is connected to the information processing device 200 by wire or wirelessly so as to communicate with the information processing device 200.

The image acquisition unit 2001 acquires the image from the image capturing device 100. The image acquisition unit 2001 receives the image transmitted by the image transmission unit 1002, stores the image in the image data table 224, or passes the image to the image analysis unit 2004. The image acquisition unit 2001 is connected to the image capturing device 100 by wire or wirelessly so as to communicate with the image capturing device 100.

The target detection unit 2002 detects a person (target person) to be subjected to the image analyze from the acquired image. For example, the target detection unit 2002 recognizes an object appearing in the image, determines whether or not the recognized object is a person, and when determining that the object is a person, detects the person as the target person.

The use application determination unit 2003 determines an image analysis use application for the image of the person detected by the target detection unit 2002. The image analysis use application is what type of image analysis the image of the target person is used for. The image analysis use applications include, for example, individual identification processing, attribute determination processing, and flow rate analysis processing.

The image analysis unit 2004 executes, for the target person, image processing for the use application (type of image analysis) determined by the use application determination unit 2003. The image analysis unit 2004 includes, for example, an individual identification unit 20041, an attribute determination unit 20042, and a flow rate analysis unit 20043.

The individual identification unit 20041 executes the individual identification processing. The attribute determination unit 20042 executes the attribute determination processing. The flow rate analysis unit 20043 executes the flow rate analysis processing. For example, the image of the target person for which each processing is executed is required to be a higher fineness (finer) image in the order of the individual identification processing, the attribute determination processing, and the flow rate analysis processing. The image analysis unit 2004 stores the result of image analysis in each processing in the image analysis result table 225.

### <Captured image analysis processing>

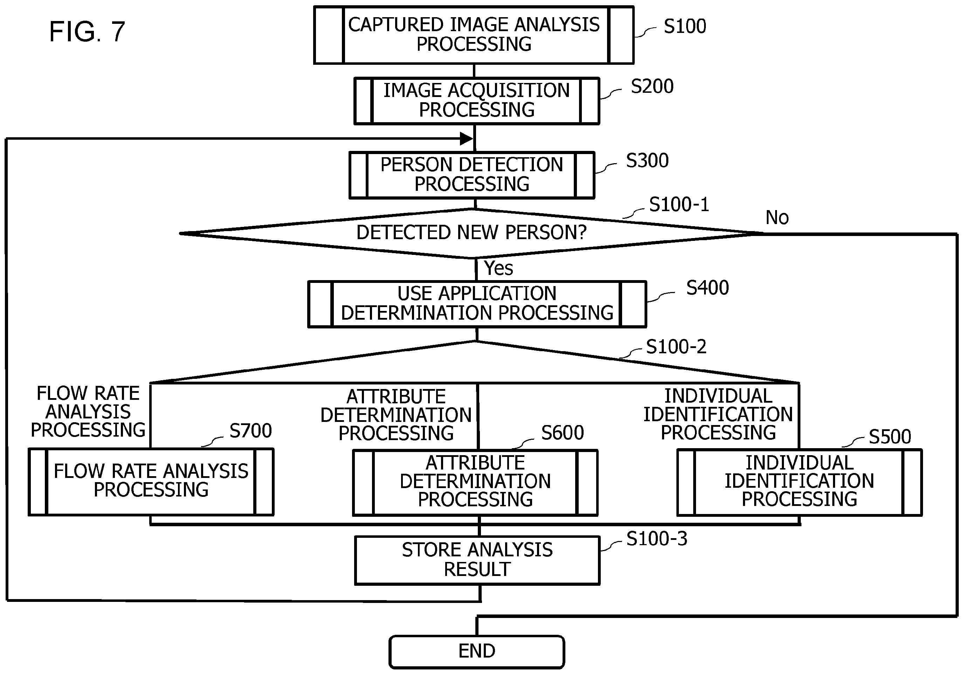

Captured image analysis processing S100 executed by the information processing device 200 will be described. Fig. 7 illustrates an example of a processing flowchart of the captured image analysis processing S100. The captured image analysis processing S100 is processing of detecting a target person from the image, determines the fineness of image of the detected target person, and executes image analysis processing (individual identification processing, attribute determination processing, or flow rate determination processing) according to the fineness of image.

When the information processing device 200 detects a trigger to execute the captured image analysis processing S100, the information processing device 200 executes the captured image analysis processing S100. The trigger to execute the captured image analysis processing S100 is, for example, detecting that a timer for measuring the execution interval has expired or that a new image has been captured by the image capturing device 100.

The information processing device 200 executes the image acquisition processing in the captured image analysis processing S100 (S200). The image acquisition processing S200 is processing of acquiring a captured image from the image capturing device 100. The information processing device 200 stores the acquired image in, for example, the internal memory. The information processing device 200 may request the image capturing device 100 to transmit the captured image in the image acquisition processing S200, or may acquire an image autonomously transmitted by the image capturing device 100.

When the information processing device 200 acquires the image, the information processing device 200 executes the person detection processing (S300). The person detection processing S300 is processing of analyzing the acquired image and detecting a target (target person) for the image analysis. The person detection processing S300 may be executed a plurality of times in a series of steps of the captured image analysis processing S100, and in that case, the target persons detected in the past are stored so as not to detect the same target person in the plurality of executions. The details of the person detection processing S300 will be described later.

The information processing device 200 checks whether or not a new target person is detected in the person detection processing S300 (S100-1). When the information processing device 200 detects a new target person (Yes in S100-1), the information processing device 200 executes the use application determination processing for the detected target person (S400). The use application determination processing S400 is processing of determining a use application (type) of image analysis for the target person. The details of the use application determination processing S400 will be described later.

The information processing device 200 executes the corresponding image analysis processing according to the result of the use application determination processing S400 (S100-2). The types of image analysis processing include, for example, the individual identification processing S500, the attribute determination processing S600, and the flow rate analysis processing S700.

After the information processing device 200 executes each image analysis processing, the information processing device 200 stores the analysis result of the image analysis in the image analysis result table 225 (S100-3), and executes the person detection processing S300 again.

Then, the information processing device 200 repeats the person detection processing S300 to the processing S100-3 until a new target person is no longer detected in the person detection processing S300 (No in S100-1). As a result, the information processing device 200 can execute the corresponding image analysis for all the target persons appearing in the acquired image.

Each processing executed in the captured image analysis processing S100 will be described below.

### <1. Person detection processing>

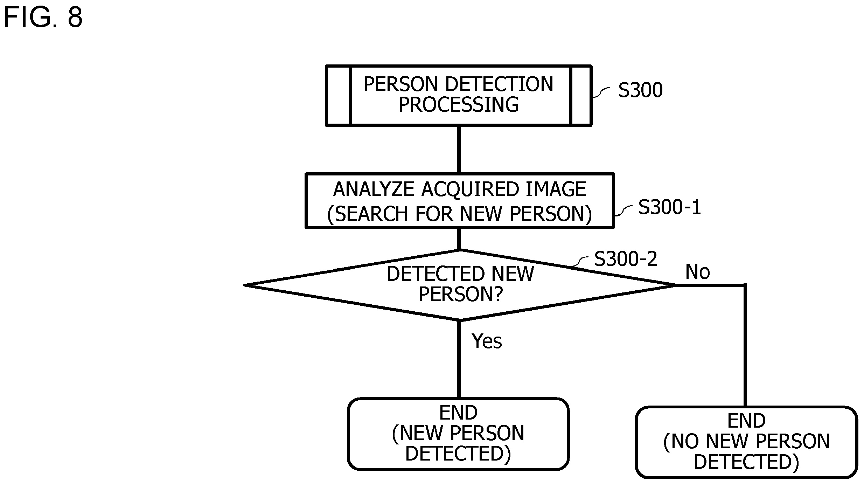

Fig. 8 illustrates an example of a processing flowchart of the person detection processing S300. The information processing device 200 analyzes the acquired image and detects a new target person (S300-1).

When the information processing device 200 detects a new target person (Yes in S300-2), the information processing device 200 stores the state where the new person is detected and then ends the processing.

On the other hand, when the information processing device 200 does not detect a new target person (No in S300-2), the information processing device 200 stores the state where no new person is detected and then ends the processing.

Searching for a new target person in the person detection processing S300 includes, for example, identifying an object appearing in the image, and determining whether or not the identified object is the target person depending on whether or not the identified object has human features. The information processing device 200 may store, for example, any coordinates (e.g., the center coordinates, the coordinates of the upper, lower, left, and right edges) of the image of the target person detected in the past in the internal memory in order not to search for the target person including the coordinates, so that the already detected target person is not detected in the person detection processing S300.

### <2. Use application determination processing>

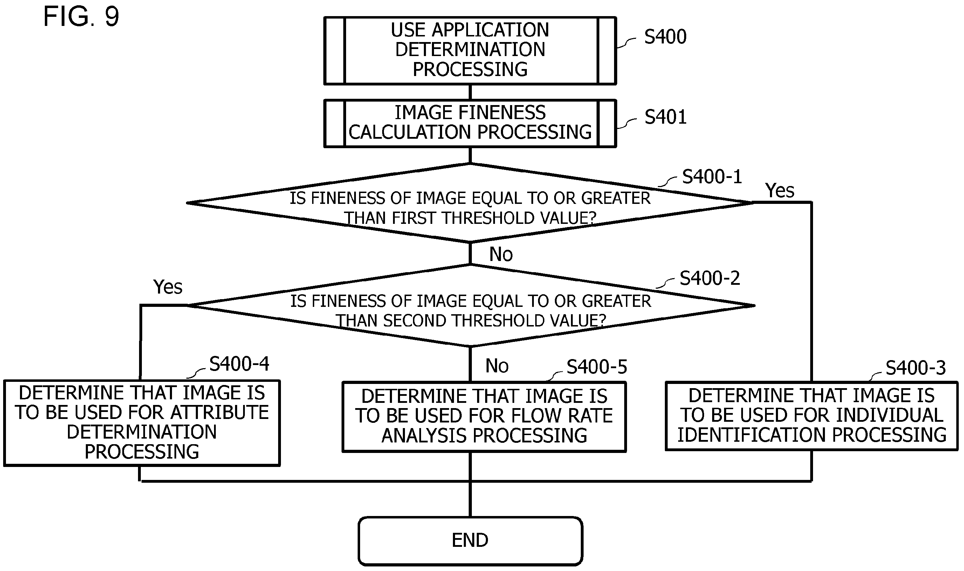

Fig. 9 illustrates an example of a processing flowchart of the use application determination processing S400. The information processing device 200 performs image fineness calculation processing in the use application determination processing S400 (S401). The image fineness calculation processing S401 is processing of calculating a fineness of image of the target person. The details of the image fineness calculation processing will be described later. Note that, in the first embodiment, the higher the fineness of image, the clearer the image, and it is possible to execute more advanced image analysis.

When the calculated fineness of image is equal to or greater than a first threshold value (Yes in S400-1), the information processing device 200 determines that the image is to be used for the individual identification processing (S400-3), and then ends the processing. The first threshold value is a threshold value set based on the fineness of image required to execute (used when executing) the individual identification processing.

On the other hand, when the calculated fineness of image is not equal to or more than the first threshold value (No in S400-1), the information processing device 200 compares the fineness of image with a second threshold value (S400-2).

When the fineness of image is equal to or greater than the second threshold value (Yes in S400-2), the information processing device 200 determines that the image is to be used for the attribute identification processing (S400-4), and then ends the processing. The second threshold value is a threshold value set based on the fineness of image required to perform (used when performing) the attribute determination processing.

On the other hand, when the fineness of image is not equal to or greater than the second threshold value (No in S400-2), the information processing device 200 determines that the image is to be used for the flow rate analysis processing (S400-5), and then ends the processing.

### <3. Image fineness calculation processing>

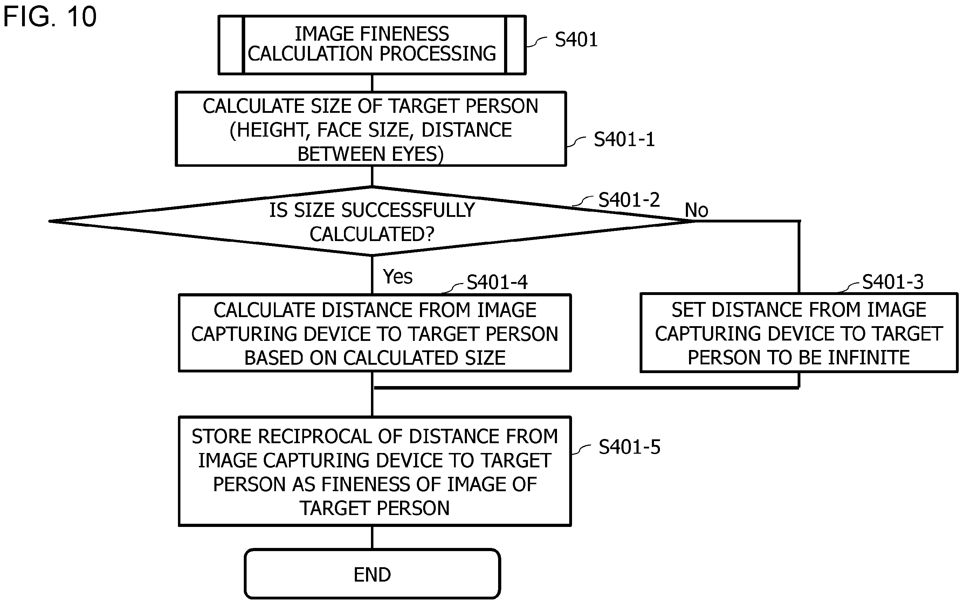

Fig. 10 illustrates an example of a processing flowchart of the image fineness calculation processing S401. The fineness of image in the first embodiment is a numerical value based on an estimated distance between the target person and the image capturing device 100.

The information processing device 200 calculates the size of the target person (height, face size, distance between the eyes, etc.) (S401-1). When the information processing device 200 cannot calculate the size of the target person because the target person is too small or the image is unclear (No in S401-2), the information processing device 200 sets the estimated distance to be infinite (or a sufficiently large value) (S401-3).

On the other hand, when the information processing device 200 can calculate the size of the target person (Yes in S401-2), the information processing device 200 calculates the estimated distance from the calculated size (S401-4).

Then, when the estimated distance is determined, the information processing device 200 stores the reciprocal of the estimated distance as the fineness of image of the target person (S401-5), and then ends the processing. As a result, the information processing device 200 can calculate a higher fineness of image as the estimated distance is shorter.

In the first embodiment, the information processing device 200 determines a type of image analysis for the target person according to the fineness of image. As a result, the information processing device 200 can execute appropriate image analysis processing according to the fineness of image for each of the target persons appearing in a single image.

### <Modifications of image fineness calculation processing>

In the first embodiment, the image fineness calculation processing S401 is processing of calculating a fineness of image based on the size of the target person. However, the fineness of image may be calculated according to motion blur of the target person (blurring of the image due to the movement of the target person) or a degree of missing part of the image of the target person.

### <Image fineness calculation processing based on motion blur>

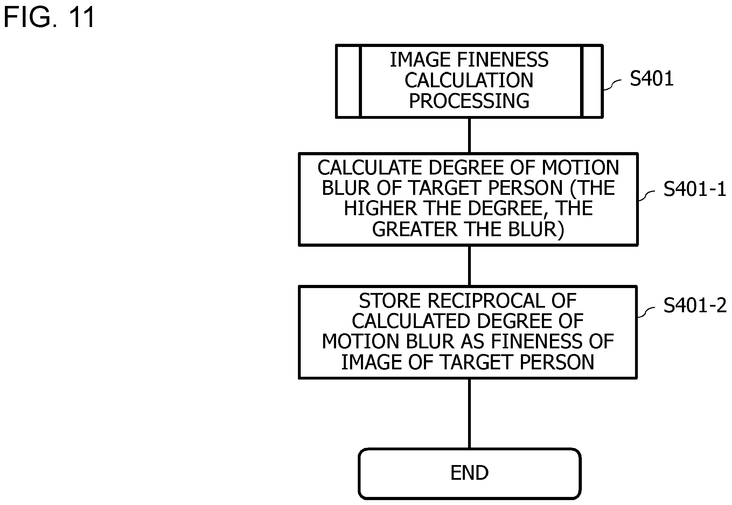

Fig. 11 illustrates an example of a processing flowchart of the image fineness calculation processing S401 based on motion blur.

The information processing device 200 calculates a degree of motion blur (S401-1). For example, the higher the value of the degree of motion blur, the greater the blurring of the image.

The information processing device 200 stores the reciprocal of the calculated value of the motion blur as the fineness of image of the target person (S401-2), and then ends the processing. As a result, the information processing device 200 can calculate a higher fineness of image as the degree of motion blur is smaller.

### <Image fineness calculation processing based on degree of missing part of image>

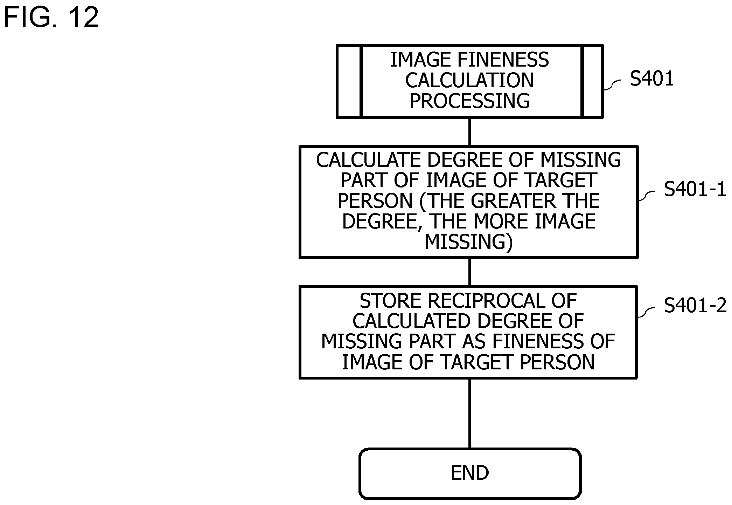

Fig. 12 illustrates an example of a processing flowchart of the image fineness calculation processing S401 based on a degree of missing part of image.

The information processing device 200 calculates a degree of missing part of the image (S401-1). For example, the higher the value of the degree of missing part of the image, the larger the missing area or ratio of the image.

The information processing device 200 stores the reciprocal of the calculated value of the degree of missing part of the image as the fineness of image of the target person (S401-2), and then ends the processing. As a result, the information processing device 200 can calculate a higher fineness of image as the degree of missing part of the image is smaller.

### [Other Embodiments]

In the first embodiment, there are three types of image analysis processing: the individual identification processing, the attribute determination processing, and the flow rate analysis processing. However, there may be any number of types of image analysis processing as long as it is two or more. Further, the types of image analysis processing may include other types of image analysis processing. The other types of image analysis processing may include, for example, motion analysis processing for analyzing what kind of motion the target person performs and behavior analysis processing for analyzing the behavior (line of sight, movement, etc.) of the target person.

Further, in the first embodiment, the target of the image analysis processing is a person, but it may be a moving object or a static object. The static object is, for example, an article for sale for which the sales status may be managed by image analysis.

Further, the fineness of image may be calculated by a calculation method other than the image fineness calculation processing exemplified in the first embodiment and the modifications.

Further, the fineness of image may be calculated by a combination of the calculations of fineness of image in the image fineness calculation processing exemplified in the first embodiment and the modifications. The fineness of image may be, for example, the reciprocal of a numerical value obtained by calculating the estimated distance, the degree of motion blur, and the degree of missing part of the image and multiplying the calculated values.

Further, the information processing device 200 may calculate a plurality of finenesses of image and determine a type of image analysis processing from the calculated finenesses of image. For example, the information processing device 200 compares each of the finenesses of image with a threshold value, and determines a type of image analysis according to each of the finenesses of image. Then, the information processing device 200 may determine the most determined type of image analysis processing among the types of image analysis suitable for the respective determined finenesses of image as the type of image analysis processing for the target person. Further, the information processing device 200 may determine the most advanced (or the least advanced) type of image analysis processing among the types of image analysis suitable for the respective determined finenesses of image as the type of image analysis processing for the target person.

Further, in the first embodiment and the modifications, the fineness of image is a reciprocal of the estimated distance, the degree of motion blur, or the degree of missing part of the image. However, the fineness of image may be, for example, the estimated distance, the degree of motion blur, or the degree of missing part of the image itself. In this case, the lower the fineness of image, the clearer the image or the larger the image. Further, the fineness of image may be a numerical value that has been processed, for example, by adding or multiplying a certain coefficient to or by the estimated distance, the degree of motion blur, or the degree of missing part of the image.

### REFERENCE SIGNS LIST

- 10: Information processing system
- 100: Image capturing device
- 110: CPU
- 120: Storage
- 121: Image capturing program
- 122: Image transmission program
- 130: Memory
- 160: Camera
- 200: Information processing device
- 210: CPU
- 220: Storage
- 221: Image acquisition program
- 222: Image use application determination program
- 2221: Person detection module
- 2222: Use application determination module
- 2231: Individual identification module
- 2232: Attribute determination module
- 2233: Flow rate analysis module
- 223: Use application-specific image analysis program
- 224: Image data table
- 225: Image analysis result table
- 230: Memory
- 250: Display
- 1001: Image capturing unit
- 1002: Image transmission unit
- 2001: Image acquisition unit
- 2002: Target detection unit
- 2003: Use application determination unit
- 2004: Image analysis unit
- 20041: Individual identification unit
- 20042: Attribute determination unit
- 20043: Flow rate analysis unit

## Claims

1. An information processing device of an information processing system that includes an information processing device and an image capturing device configured to capture an image, the information processing device comprising:
an image acquirer configured to acquire the image captured by the image capturing device;
a target detector configured to detect from the acquired image a target for which an image analysis is performed;
a use application determination controller configured to calculate a fineness of image of the detected target and determine a type of the image analysis according to the calculated fineness of image; and
an image analyzer configured to perform the determined type of image analysis.

2. The information processing device according to claim 1, wherein
the fineness of image is a numerical value indicating a degree of sharpness of an image of the target,
the use application determination controller is configured to determine that a first type of image analysis is to be performed in a case where the fineness of image is a first numerical value and that a second type of image analysis is to be performed in a case where the fineness of image is a second numerical value lower than the first numerical value, the second type of image analysis including an image analysis for an image with a lower fineness of image than a fineness of image of an image used to execute the first type of image analysis.

3. The information processing device according to claim 1 or 2, wherein, in calculating the fineness of image, the use application determination controller is configured to estimate a distance between the target and the image capturing device based on a size of the target in the image.

4. The information processing device according to claim 1 or 2, wherein, in calculating the fineness of image, the use application determination controller is configured to calculate a degree of blur of the image of the target due to a movement of the target.

5. The information processing device according to claim 1 or 2, wherein, in calculating the fineness of image, the use application determination controller is configured to calculate a degree of missing part of the image of the target.

6. The information processing device according to claim 1, wherein types of image analysis to be performed by the image analyzer include individual identification processing for identifying the target as an individual.

7. The information processing device according to claim 1, wherein types of image analysis to be performed by the image analyzer include attribute determination processing for determining an attribute of the target.

8. The information processing device according to claim 1, wherein types of image analysis to be performed by the image analyzer include flow rate analysis processing for analyzing the number of targets and transition of the number over time.

9. The information processing device according to claim 1, wherein, in calculating the fineness of image, the use application determination controller is configured to calculate one or more of: a distance between the target and the image capturing device estimated based on the size in the image of the target; a degree of blur of the image of the target due to movement; and a degree of missing part of the image of the target.

10. The information processing device according to claim 1 or 2, wherein
types of image analysis to be performed by the image analyzer include individual identification processing for identifying the target as an individual, attribute determination processing for determining an attribute of the target, and flow rate analysis processing for analyzing the number of targets and transition of the number over time, and
the use application determination controller is configured to determine that the individual identification processing is to be performed in a case where the fineness of image is equal to or greater than a first threshold value, determine that the attribute determination processing is to be performed in a case where the fineness of image is less than the first threshold value and equal to or greater than a second threshold value, and determine that the flow rate analysis processing is to be performed in a case where the fineness of image is less than the second threshold value.

11. The information processing device according to claim 1, wherein the image acquirer is configured to acquire the image by receiving the image transmitted from the image capturing device.

12. The information processing device according to claim 1, wherein the target detector is configured to store information on the detected target, and not to detect the detected target again as a target based on the stored information.

13. A program for an information processing device of an information processing system that includes an information processing device and an image capturing device configured to capture an image, the program causing a computer included in the information processing device to execute:
processing of acquiring the image captured by the image capturing device;
processing of detecting from the acquired image a target for which an image analysis is performed;
processing of calculating a fineness of image of the detected target and determining a type of the image analysis according to the calculated fineness of image; and
processing of performing the determined type of image analysis.

14. An information processing method performed in an information processing device of an information processing system that includes an information processing device and an image capturing device configured to capture an image, the information processing method comprising:
acquiring the image captured by the image capturing device;
detecting from the acquired image a target for which an image analysis is performed;
calculating a fineness of image of the detected target and determining a type of the image analysis according to the calculated fineness of image; and
performing the determined type of image analysis.
